(19) Europäisches Patentamt
European Patent Office
Office européen des brevets

(11) **EP 2 208 241 B1**

(12) **EUROPÄISCHE PATENTSCHRIFT**

(45) Veröffentlichungstag und Bekanntmachung des Hinweises auf die Patenterteilung:
**27.06.2012 Patentblatt 2012/26**

(21) Anmeldenummer: **08850533.4**

(22) Anmeldetag: **14.11.2008**

(51) Int Cl.:
**H02N 2/06** *(2006.01)*   *F02D 41/20 (2006.01)*
*F02D 41/24 (2006.01)*

(86) Internationale Anmeldenummer:
**PCT/EP2008/065551**

(87) Internationale Veröffentlichungsnummer:
**WO 2009/063047 (22.05.2009 Gazette 2009/21)**

(54) **VERFAHREN UND VORRICHTUNG ZUR KALIBRIERUNG EINES IN EINEM KRAFTFAHRZEUG ZUM ANTRIEB EINES SCHALTVENTILS BETRIEBENEN PIEZO-AKTUATORS**

METHOD AND DEVICE FOR THE CALIBRATION A PIEZO-ACTUATOR THAT IS ACTUATED IN A MOTOR VEHICLE FOR DRIVING A SWITCHING VALVE

PROCÉDÉ ET DISPOSITIF POUR ÉTALONNER UN ACTIONNEUR PIÉZOÉLECTRIQUE UTILISÉ DANS UN VÉHICULE AUTOMOBILE POUR ENTRAÎNER UNE SOUPAPE DE COMMANDE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.11.2007 DE 102007054374**

(43) Veröffentlichungstag der Anmeldung:
**21.07.2010 Patentblatt 2010/29**

(73) Patentinhaber: **Continental Automotive GmbH
30165 Hannover (DE)**

(72) Erfinder:
 • **REICHINGER, Christian
 93073 Neutraubling (DE)**
 • **SCHROD, Walter
 93057 Regensburg (DE)**
 • **WIEHOFF, Hans-Jörg
 93051 Regensburg (DE)**

(56) Entgegenhaltungen:
 **DE-A1- 19 804 196    DE-A1-102006 011 725
 DE-C1- 19 902 413**

EP 2 208 241 B1

## Beschreibung

Die vorliegende Erfindung betrifft ein Verfahren und eine Vorrichtung zum Kalibrieren eines in einem Kfz eingesetzten Piezo-Aktuators, der ein Schaltventil antreibt. Piezo-Aktuatoren werden im Automobilbereich vor allem als Stellantriebe für Zumessvorrichtungen, so insbesondere für Einspritzventile, eingesetzt. Sie ermöglichen ein extrem schnelles Schalten des von dem Einspritzventil umfassten Schaltventils und ermöglichen so beispielsweise mehrere Einspritzvorgänge während eines Arbeitszyklusses eines Zylinders einer Brennkraftmaschine. Piezo-Stellglieder finden zunehmend auch in anderen Sektoren des Kfz-Bereichs Verwendung, z.B. in Bremsanlagen.

Heutige moderne Motormanagementsysteme von Verbrennungsmotoren streben einen möglichst emissions- und verbrauchsarmen Betrieb, sowie die Erfüllung (künftiger) gesetzlicher Rahmenbedingungen an. Das Streckenverhalten von Verbrennungsmotoren ist aufgrund der Dynamik von Gasaustausch und Verbrennung als nichtlinear zu charakterisieren und weist eine ausgeprägte Temperaturabhängigkeit auf. Die Gemischbildungsprozesse werden im Wesentlichen durch Gasaustausch, Einspritzmenge und Einspritzverlauf beeinflusst. Eine entscheidende Aufgabe übernimmt hierbei die präzise Ansteuerung der Einspritzkomponenten. Dabei sind Einspritzmengengenauigkeit und Einpritzzeitpunkt elementare Parameter für eine optimale Gestaltung der Verbrennungsverläufe. Moderne Einspritzelemente, wie z.B. in Common Rail oder Pumpe-Düse Systemen eingesetzt, werden schon heute mit Hilfe piezo-gesteuerter Schaltventile betrieben.

Ein Vorteil der piezo-gesteuerten Schaltventile ist unter anderem, dass sie nicht nur aktuatorisch wirken, sondern auch unter Ausnutzung des piezoelektrischen Effektes als Sensor eingesetzt werden können. Aus den inhärenten sensorischen Eigenschaften dieser Piezoelemente können dabei Informationen über Auslenkung und wirkende Kräfte, Verschleiß oder Leerhub generiert werden. Durch diesen Informationsgewinn ist es möglich, Regelungskonzepte aufzubauen, die mit Hilfe der Kraftbilanz des Stellglieds innere Systemdrücke und Ventilnadelhübe exakt regeln können.

Diese Stellglieder weisen jedoch auch Nachteile auf, die im nichtlinearen und hysteresebehafteten Verhalten des Piezoelementes selbst liegen. Die das Verhalten des Piezoelementes festlegenden Materialkoeffizienten sind - entgegen der üblichen Annahme - keine unabhängigen Konstanten, da diese Bekannten 'Materialkonstanten' die Materialeigenschaften nur unter Kleinsignalbedingungen beschreiben. Tatsächlich variiert ihre Größe jedoch mit Temperatur, Druck und anderen Randbedingungen, so dass das Verhalten komplexer Komponenten, wie piezo-gesteuerter Einspritzventile, bei denen es auf eine präzise Ansteuerung besonders ankommt, unter realen Einsatzbedingungen durch einen linearen Ansatz, insbesondere die Annahme eines konstanten Piezo-Moduls $d_{ij}$, nicht ausreichend vorhergesagt werden kann. Bei Temperatur- und Laständerungen weisen die Piezo-Aktuatoren z.B. unterschiedliche Ausdehnungskoeffizienten (Piezo-Modul) auf, die wiederum mit heute angewandten linearen Regelungskonzepten und angesichts der aus technischen Gründen sehr hohen Fertigungstoleranzen von Piezo-Aktoren nur bedingt über alle Betriebspunkte und Lebensdauer zu regeln sind.

Zur Bestimmung der Materialkoeffizienten von Piezoelementen sind bisher einerseits Verfahren bekannt, die für Kleinsignalmessungen herangezogen werden, bei denen also das Piezoelement lediglich mit einer vergleichsweise geringen elektrischen Energie (beispielsweise wenigen V/mm) beaufschlagt wird. Bekannt sind dabei insbesondere impedanzspektroskopische Messmethoden, mit deren Hilfe die Bestimmung des vollständigen Datensatzes der elastischen, dielektrischen und piezoelektrischen Materialparameter grundsätzlich möglich ist. Dazu wird die piezokeramische Probe in einem vorgegebenen Frequenzbereich einem sinusförmigen Wechselfeld ausgesetzt und ihre Impedanz als Funktion der Frequenz mittels eines handelsüblichen Impedanzanalysators aufgezeichnet. Dabei werden die Resonanzfrequenzen von piezoelektrischen Prüfkörpern verschiedenen Geometrien gemessen. Durch die Kombination von verschiedenen Schwingungsmoden ist es möglich, den kompletten Datensatz des Piezoelektrikums zu bestimmen. Bei dieser Methode handelt es sich, auch wenn bestimmte Materialkoeffizienten bereits aus anderen Messungen vorgegeben sind und nur eine Probe durchgemessen wird, um ein relativ aufwändiges Laborverfahren. Der benötigte Hardware-Aufwand für die dabei aufzuwendende Rechenleistung erscheint außerhalb von Labortests in der Praxis nicht vertretbar.

Bei Messungen im Großsignalbetrieb hingegen werden derzeit direkt Auslenkung und Kraft des Piezoelements gemessen, die bei der Ansteuerung mit einer entsprechenden Feldstärke entstehen. Derartige, recht aufwändige Messungen, bei denen die Wege sehr klein und die Kräfte sehr groß sind, sind während des Betriebs eines piezogetriebenen Einspritzventils nicht ohne größere Schwierigkeiten durchführbar.

Aus der DE 198 04 196 A1 ist ein Verfahren zur Diagnose eines piezo-mechanischen Systems eines im Betrieb befindlichen Einspritzsystems bekannt, bei dem die Tatsache ausgenutzt wird, dass der Zustand des mechanischen Teilsystems (zu dem auch die mechanische Umgebung des Piezoelements gehört) die elektrischen Kennwerte des Piezoelements in charakteristischer Weise beeinflusst, so dass durch Erfassung und Auswertung dieser elektrischen Kennwerte die Erkennung von Funktionsstörungen der mechanischen Funktion des piezo-mechanischen Systems möglich ist. Dabei ist es auch bekannt, das Piezoelement mit einem Spannungssignal zeitlich variabler Frequenz anzusteuern und dann aus den Extremwerten des elektrischen Impedanzverlaufs Resonanzfrequenzen zu ermitteln. Neben einem Strom- und/oder Spannungsdetektor ist ein Frequenzgenerator zur Erzeugung der sinusförmigen Spannungssignale vorgesehen.

Weitere Verfahren sind z.B. in DE 19902413 C1 oder DE 10 2006 725 A1 offenbart.

Die Aufgabe der vorliegenden Erfindung besteht darin, ein Verfahren und eine Vorrichtung zum Kalibrieren eines im Kfz-Bereich eingesetzten Piezo-Aktuators zu schaffen, um das betriebspunktabhängige nichtlineare dynamische Verhalten individuell festzustellen und gegebenenfalls im Betrieb berücksichtigen zu können.

Diese Aufgabe wird durch ein Verfahren nach Patentanspruch 1 und durch eine Vorrichtung nach Patentanspruch 9 gelöst. Vorteilhafte Ausgestaltungen und Weiterentwicklungen der vorliegenden Erfindung gehen aus der folgenden Beschreibung, den Zeichnungen und den abhängigen Ansprüchen hervor.

Die Erfindung zeichnet sich aus durch ein Verfahren zur Kalibrierung eines in einem Kraftfahrzeug mittels einer Steuerschaltung und einer Endstufe betriebenen Piezo-Aktuators, der als Stellantrieb auf ein Schaltventil einwirkt. Der Piezo-Aktuator wird im Betrieb (also 'On-Board' beziehungsweise 'online') der Steuerschaltung und der Endstufe mit einem im Großsignalbereich des Piezo-Aktuators liegenden elektrischen Kalibrierpuls beaufschlagt, dessen Frequenz über die Zeit verändert wird. Während des Kalibrierpulses wird der zugehörige frequenzabhängige elektrische Impedanzverlauf ermittelt und ausgewertet, wobei die Endstufe in diesem Zeitraum von der Steuerschaltung so angesteuert wird, dass nicht die regulären Ansteuerpulse zum Betätigen des Piezo-Aktuators, sondern der besondere Kalibrierpuls erzeugt wird. Auf diese Weise kann mit einfach messbaren Größen oder auch mittelbaren Größen das individuelle Verhalten des jeweiligen Piezo-Aktuators im Großsignalbereich ermittelt und festgehalten werden und somit ein Kalibrieren sehr präzise durchgeführt werden. Durch Auswertung des Impedanzverhaltens des Piezo-Aktuators kann auf die nichtlinearen Kenngrößen des Piezoelements selbst und/oder auf externe Ereignisse in dessen Umgebung geschlossen werden.

Gemäß einer vorteilhaften Ausführungsform der Erfindung werden aus den Extremwerten des ermittelten Impedanzverlaufs die Resonanzfrequenzen ($f_p$, $f_s$) bestimmt und daraus der piezoelektrische Kopplungsfaktor $k_{eff}$ abgeleitet. Dieser Kopplungsfaktor wird dann zur Bestimmung der nichtlinearen Materialkoeffizienten, die der Piezo-Aktuator im Großsignalbereich aufweist, herangezogen.

Gemäß einer als besonders vorteilhaft angesehenen Weiterbildung diese Ausführungsform sind die dielektrischen Materialkoeffizienten des Piezo-Aktuators im Großsignalbereich vorgegeben und werden zusammen mit dem ermittelten piezoelektrischen Kopplungsfaktor zur Bestimmung der nichtlinearen piezoelektrischen und/oder elastischen Materialkoeffizienten herangezogen. Das Verfahren kann also insbesondere dann vorteilhaft eingesetzt werden, wenn zwar eine Großsignal-Kapazität beziehungsweise Großsignal-Dielektrizitätskonstante anderweitig ermittelt oder vorgegeben wird, andererseits die Umstände jedoch keinen Zugriff auf eine entsprechende Kleinsignal-Kapazität beziehungsweise Kleinsignal- Dielektrizitätskonstante erlauben.

Gemäß einer weiteren Ausführungsform wird abhängig von den ermittelten nichtlinearen Materialkoeffizienten mindestens ein Ansteuerparameter zum Ansteuern des Piezo-Aktuators angepasst. Dies hat dann den Vorteil, dass der Piezo-Aktuator sehr präzise angesteuert werden kann und insbesondere, wenn dieser zum Zumessen von Fluid eingesetzt wird, dieses sehr präzise auch bei Kleinstmengen zugemessen werden kann.

Alternativ oder zusätzlich zur Ermittlung des nichtlinearen Verhaltens des Piezoelementes selbst kann durch zusätzliche Auswertung weiterer in der Steuerschaltung vorliegender und/oder von ihr ermittelter Daten auf Ereignisse oder Zustände in einer mit dem Piezo-Aktuator verbundenen, mechanisch bewegbaren Vorrichtung geschlossen werden. Dies kann dahingehend weitergebildet werden, dass, abhängig von den ermittelten Ereignissen oder Zuständen, mindestens ein Ansteuerparameter zum Ansteuern des Piezo-Aktuators angepasst wird. Hierdurch kann - zusätzlich zum Piezoelement selbst - auch beispielsweise der Injektor als Ganzes entsprechend seinem aktuellen Zustand nachgeführt, das heißt, entsprechend seinen aktuellen und individuellen Werten im Betrieb eingesetzt werden.

Zur Ermittlung des Impedanzverlaufs ist es bei allen zuvor genannten Ausführungsformen günstig, die am Piezo-Aktuator abfallende elektrische Spannung und den von diesem aufgenommene Strom zu erfassen, wobei der von der Endstufe angesteuerte Piezo-Aktuator in Reihe mit einem an Masse liegenden Strommesswiderstand geschaltet ist. Das erfasste Spannungssignal wird gemäß einer vorteilhaften Weiterbildung der zuletzt genannten Ausführungsform dem analogen Eingang eines bevorzugt in der Steuerschaltung enthaltenen Prozessors zugeführt, der das Spannungssignal durch Abtastung digitalisiert und danach auswertet.

Die erfindungsgemäße Vorrichtung zur On-Board-Kalibrierung eines in einem Kraftfahrzeug betriebenen Piezo-Aktuators umfasst Mittel zur Durchführung eines Verfahrens der oben beschriebenen Art.

Die bevorzugten Ausführungsformen der vorliegenden Erfindung werden unter Bezugnahme auf die begleitende Zeichnung näher erläutert. Es zeigen:

Fig. 1 einen Injektor mit einem Piezo-Aktuator und eine zugeordnete Steuervorrichtung,

Fig. 2 ein aus dem Stand der Technik bekanntes Ersatzschaltbild eines Piezo-Aktuators mit einem Serien- und einem Parallelschwingkreis,

Fig. 3 eine Darstellung des Impedanzverlaufs des durch die Schwingkreise gemäß Figur 2 simulierten Piezos,

Fig. 4 ein Blockschaltbild eines durch eine Endstufe angesteuerten Piezo-Aktuators,

Fig. 5 einen Schaltplan eines durch eine Endstufe angesteuerten Piezo-Aktuators.

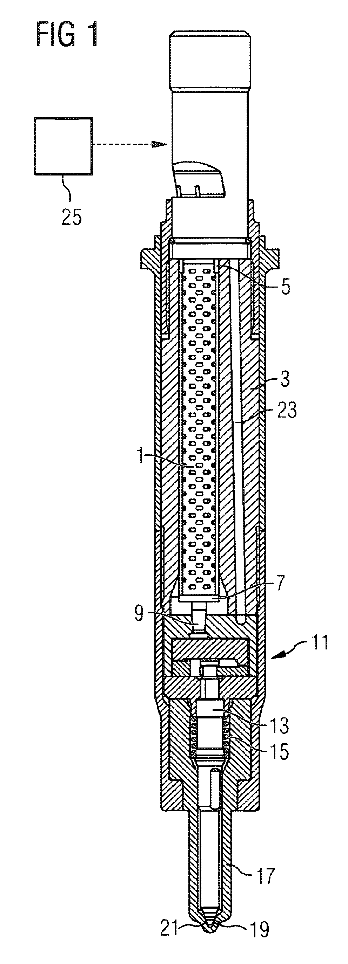

Das in Figur 1 dargestellte Einspritzventil (Injektor) hat einen Stellantrieb, der als Piezo-Aktuator 1 ausgebildet ist. Der Pie.zo-Aktuator 1 hat eine Anzahl $n_L$ an Piezoelementen. Die Anzahl $n_L$ kann beispielsweise in etwa 200 betragen. Der Piezo-Aktuator 1 hat ein erstes freies Ende 5 und ein zweites freies Ende 7. Der Piezo-Aktuator 1 ist mit seinem ersten freien Ende 5 in einem Gehäuse 3 des Injektors verankert, bevorzugt durch Einschweißen. Im Bereich seines zweiten freien Endes 7 wirkt er, hervorgerufen durch ein Längen des Piezo-Aktuators 1, auf ein Schaltventil des Injektors ein. Das Schaltventil umfasst einen Stift 9 und eine Hebelvorrichtung 11, die bevorzugt den Hub des Piezo-Aktuators 1 umgekehrt. Das Schaltventil umfasst ferner eine Düsennadel 13, die mit einer Düsenfeder 15 gekoppelt ist, und einen Düsenkörper 17, in dem ein Sitz 19 für die Düsennadel 13 ausgebildet ist. Die Düsenfeder 15 ist so angeordnet, dass sie ohne das Einwirken von Kräften hervorgerufen durch den Stellantrieb die Düsennadel in ihre Schließposition vorspannt, in der die Düsennadel einen Fluidfluss durch eine Einspritzöffnung 21 unterbindet. Außerhalb der Schließposition gibt die Düsennadel 13 den Fluidfluss durch die Einspritzöffnung 21 frei.

Das Einspritzventil hat darüber hinaus eine Hochdruckfluidzuführung 23, über die das Einspritzventil in seinem montierten Zustand bevorzugt mit einem Fluid-Hochdruckspeicher hydraulisch gekoppelt ist und durch die das Fluid zu der Einspritzöffnung 21 strömen kann. Ob sich die Düsennadel 13 in ihrer Schließposition befindet oder außerhalb der Schließposition befindet hängt ab von einer Kräftebilanz der auf sie wirkenden Kräfte, hervorgerufen durch die Kraft der Düsenfeder 15, der über den Druck des Fluids auf die Düsennadel eingekoppelten Kräfte und der durch den Piezo-Aktuator 1 auf sie einwirkenden Kraft. Durch die im Wesentlichen direkte Kopplung des Piezo-Aktuators 1 mit der Düsennadel 13 wirkt sich eine Längung des Piezo-Aktuators in einer Veränderung an dem zweiten freien Ende 7 hinsichtlich seiner Position bezogen auf den dortigen axialen Gehäusebereich direkt aus auf die Position der Düsennadel 13.

In einem Speicher einer dem Einspritzventil zugeordneten Steuervorrichtung 25 sind vorzugsweise Daten gespeichert und Programme gespeichert, die während des regulären Betriebs des Injektors abgearbeitet werden. Die Steuervorrichtung 25, die eine Steuerschaltung, einen Mikroprozessor und einen Speicher umfasst, wird auch eingesetzt zum Kalibrieren des Piezo-Aktuators 1 und kann auch als Vorrichtung zum Kalibrieren des Piezo-Aktuators 1 bezeichnet werden.

Ein Programm zum Kalibrieren des Piezo-Aktuators 1 ist in einem Speicher der Steuervorrichtung 25 gespeichert und wird von der Steuerschaltung zu vorgebbaren Zeitpunkten während des Betriebs der Zumessvorrichtung gestartet. Dies kann beispielsweise nach jeweiligem Ablauf einer vorgegebenen Zeitdauer der Fall sein oder auch der Fall sein, wenn vorgegebene Betriebsgrößen vorgegebene Werte einnehmen.

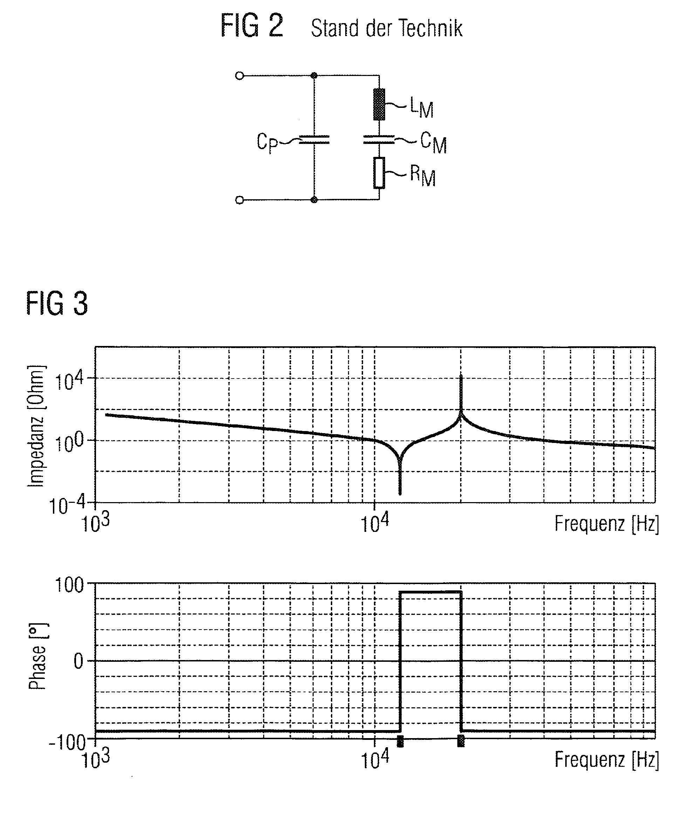

Zur Erläuterung des erfindungsgemäßen Verfahrens ist in Figur 2 zunächst ein an sich bekanntes Ersatzschaltbild dargestellt, mit dem das resonante Verhalten eines Piezoelementes elektronisch simuliert werden kann. Piezoelektrische Schwinger zeichnen sich bekanntlich durch zwei verschiedene Eigenresonanzen aus, bei denen der Imaginärteil ihres Scheinwiderstandes verschwindet. Die (isolierende) Piezokeramik (und ihre Kontaktierung) stellt zunächst einmal einen Plattenkondensator, also eine Kapazität $C_P$, dar. Parallel dazu wandelt sie elektrische in mechanische Energie, was durch den zur Kapazität $C_P$ parallelen mechanischen Zweig der Schaltung simuliert werden kann. In der Nähe einer Resonanzstelle lässt sich das Verhalten des mechanischen Zweiges durch genau drei Elemente - je eine Induktivität, Kapazität und ein ohmscher Widerstand - nachbilden, vergleiche Figur 2. Die Werte für $L_M$, $C_M$ und $R_M$ erhält man aus dem Vergleich der Differenzialgleichungen für erzwungene Schwingungen elektrischer und mechanischer Systeme. Die Serieninduktivität entspricht dann der trägen Masse, der Serienkondensator der Elastizität und der Serienwiderstand der mechanischen Dämpfung des Schwingkreises. Die mechanische (niedrige) Resonanz wird durch die Serienschaltung von $L_M$, $C_M$ und $R_M$ definiert, wobei die so genannte Serienresonanzfrequenz $f_s$ der Frequenz mit minimaler Impedanz im Serienzweig entspricht. Für nur schwach gedämpfte Systeme gilt:

$$f_s = \frac{1}{2\pi} \sqrt{1/L_M C_M}$$

Eine zweite (höhere) charakteristische Frequenz ist die Resonanzfrequenz der Gesamtschaltung, also des mechanischen Zweiges mit parallel dazu geschalteter Piezokapazität $C_P$. Diese wird als Parallelresonanzfrequenz bezeichnet:

$$f_p = \frac{1}{2\pi} \sqrt{C_P + C_M} / L_M C_M C_P$$

Als Maß für die Fähigkeit eines (Piezo-)Aktuators, elektrischer Energie in mechanische Energie umzuwandeln, wird häufig der effektive Kopplungsfaktor $k_{eff}$ verwendet. Er ist definiert als Wurzel aus dem Verhältnis von in mechanische Energie umgewandelter elektrischer Energie zur elektrischen Eingangsenergie:

$$k^2_{eff} = \text{umgewandelte Energie} / \text{elektrische Eingangsenergie}$$

Da im eingeschwungenen Zustand die Energien in den Kapazitäten gespeichert werden, lässt sich dies wie folgt berechnen:

$$k^2_{eff} = C_M / C_M + C_P$$

Mit den Formeln für die Serien- und Parallelresonanzfrequenz ergibt sich der bekannte Zusammenhang zur Berechnung des Kopplungsfaktors aus den Resonanzfrequenzen:

$$k^2_{eff} = f_p{}^2 - f_s{}^2 / f_p{}^2$$

Im oberen Diagramm der Figur 3 ist der Betrag der Impedanz gegen die Frequenz aufgetragen. Es ergibt sich der bekannte Impedanzverlauf mit einem Minimum und einem Maximum, so dass die beiden zugehörigen Frequenzen aus dem gemessenen Spektrum bestimmt werden können. Für Piezokeramiken mit einem hohen Kopplungsfaktor und einer hohen Güte liegen $f_{min, max}$ in guter Näherung in der Nähe der zugehörigen Serien- beziehungsweise Parallelresonanzfrequenz.
Im unteren Diagramm der Figur 3 ist die Phase der Impedanz gegen die Frequenz aufgetragen. Man erkennt deutlich den bei den Resonanzen jeweils auftretenden Phasensprung.
Für den Kopplungsfaktor lassen sich die beiden folgenden, bekannten Formeln ableiten:

$$k^2_{eff} = d^2_{33} / s^E_{33} * \varepsilon^T_{33}$$

$$k^2_{eff} = \varepsilon^T_{33} - \varepsilon^S_{33} / \varepsilon^T_{33}$$

Dabei bezeichnet $\varepsilon^S_{33}$ die Kleinsignal- Dielektrizitätskonstante, $\varepsilon^T33$ die Großsignal-Dielektrizitätskonstante, $s^E_{33}$ bezeichnet eine elastische Nachgiebigkeit des Piezo-Aktuators 1 und $d_{33}$ bezeichnet den Piezo-Modul des Piezo-Aktuators 1.
Bei aus dem Stand der Technik bekannten impedanzspektroskopischen Messmethoden werden üblicherweise sowohl die Klein- wie die Großsignal-Kapazität durch Messung erfasst, so dass der Kopplungsfaktor aus den beiden zuvor genannten Gleichungen eliminiert und eine Aussage über die elastische Nachgiebigkeit $s^E_{33}$ und/oder den Piezo-Modul $d_{33}$ getroffen werden kann, insbesondere durch Lösen eines Gleichungssystems, das im Wesentlichen eine weitere Gleichung enthält, die einen Zusammenhang zwischen $\Delta l$ (Piezolängung), und $s^E_{33}$ und $d_{33}$ beschreibt. Da sich jedoch herausgestellt hat, dass die Messung der Kleinsignal-Kapazität zu stark von Störeinflüssen, insbesondere $\Delta T$, abhängig ist, geht die Erfindung stattdessen den Weg, über die explizite Bestimmung des Kopplungsfaktors und eine vorgegebene Großsignal-Dielektrizitätskonstante $\varepsilon^T_{33}$ (die z.B. aus einer Messung der Großsignal-Kapazität bestimmt werden kann) Aussagen über die weiteren Materialkoeffizienten $s^E_{33}$ und $d_{33}$ im Großsignalbereich zu treffen.
Durch Onlineerfassung des Impedanzverlaufs im Großsignalbereich einer piezo-gesteuerten Antriebsstrecke und durch Auswerten der Impedanzgrenzen im vorbeschriebenen Sinne ist es demnach möglich, den piezoelektrischen Kopplungsfaktor zu errechnen und daraus auf die nichtlinearen Kenngrößen des Piezoelements zu schließen.

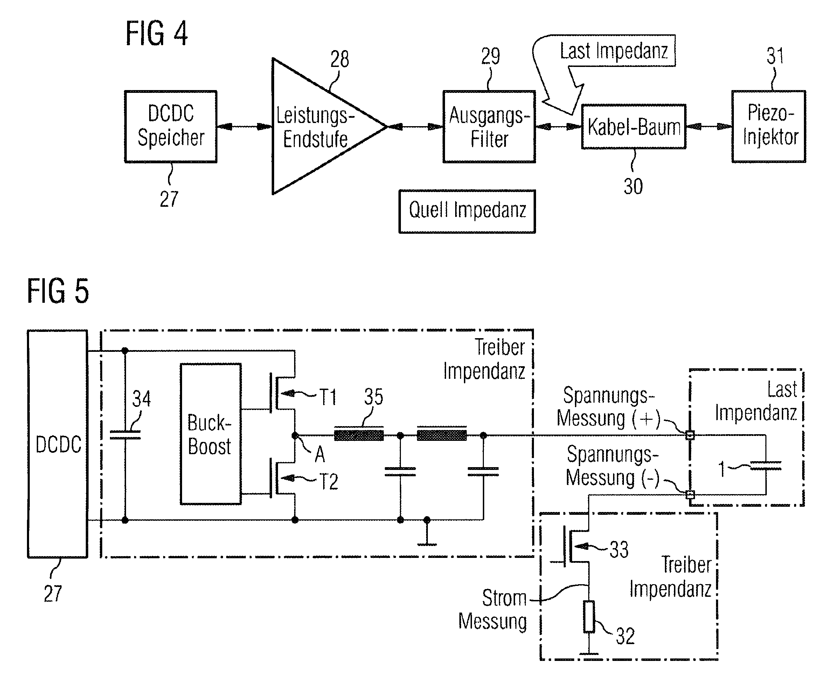

Die Onlineerfassung erfolgt während des Betriebs des Einspritzsystems durch eine geeignete Hardwareschaltung, die als Ausgang den kontinuierlichen Verlauf der Impedanz als Spannungssignal ausgibt. Das Einspritzsystem enthält eine Endstufe, vergleiche das in Figur 4 dargestellte Blockschaltbild, die regulär, wie vom Motormanagement vorgegeben, zur Erzeugung der Ansteuerpulse zum Betrieb der Piezo-Aktuatoren 1 vorgesehen ist. Diese Endstufe erzeugt auch, z.B. gemäß Ansteuerung durch eine Steuerschaltung, die Teil der Steuervorrichtung 25 sein kann, die elektrischen Kalibrierpulse, mit denen der Piezo-Aktuator 1 im Injektor 31 beaufschlagt wird.

Die Signale des Kalibrierpulses werden für die Messung der Impedanz in zeitlicher Abfolge so erzeugt, dass der vorgesehene Frequenzbereich durchgefahren wird (AC Sweep). Dies erfolgt innerhalb eines Zeitraums, innerhalb dessen kein Zumessen von Fluid durch die Einspritzöffnung vorgesehen ist, also zum Beispiel zwischen zwei regulären Ansteuerpulsen. Die Dauer und/oder die Höhe des Kalibrierpulses wird bevorzugt abhängig von mindestens einer Betriebsgröße so ermittelt, dass sichergestellt werden kann, dass durch das Beaufschlagen des Piezo-Aktuators 1 mit dem elektrischen Kalibrierpuls zuverlässig sich die Düsennadel 13 nicht von ihrer Schließposition wegbewegt, so dass keine ungewollte, reguläre Ansteuerung ausgelöst wird. Andererseits sollte der Kalibrierpuls im Großsignalbereich, hier etwa ab 100 V/mm liegen, da zum Betätigen eines Piezo-Aktuators für Kraftstoff-Einspritzventile Spannungen von typisch 100V bis 200V benötigt werden.

Ferner angedeutet in Figur 4 sind die relevante Last-Impedanz, die Quell-Impedanz und der die Endstufe mit dem Piezo-Injektor 31 verbindende Kabelbaum 30.

Das gemessene Spannungssignal wird an einen schnellen analogen Prozessoreingang angelegt, der durch geeignete Abtastung das Signal digitalisiert und durch Auswertung der Impedanzgrenzen die nichtlinearen Kenngrößen bestimmt. Diese Kenngrößen können zum Beispiel einem Piezomodell in der Motorsteuerung als Adaptionsgrößen (Adaption der Materialkoeffizienten) zugeführt werden. Andererseits kann über weitere Auswertungen auch auf Ereignisse, hervorgerufen durch externe Lasteinträge (z.B. Bewegungsbeginn der Düsennadel), geschlossen werden. Die Betrachtung sowohl der Ausgangs-Impedanz, der in der Steuervorrichtung 25 hinterlegten Steuer-Charakteristik des Piezo-Injektors und der Last-Impedanz mit der mechanischhydraulischen Rückwirkung erlaubt es, auf Kraft- beziehungsweise Weg-Änderungen innerhalb des Injektors zu schließen. Es ist dazu notwendig, die Steuer-Charakteristik zu kennen und bei der Berechnung, insbesondere zur Trennung des Blind- vom Realteil der Admittanz, zu berücksichtigen.

Im Folgenden wird die in Figur 4 und 5 dargestellte modifizierte Endstufe noch etwas näher beschrieben. Wesentlich ist dabei nicht der nur beispielhafte detaillierte schaltungstechnische Aufbau der Endstufe, zu dem es im Stand der Technik vielfache Variationen gibt, sondern die Tatsache, dass die zur Ansteuerung des Piezos des Schaltventils regulär vorgesehene Endstufe zur Implementierung des erfindungsgemäßen Verfahrens jeweils nur geringer Modifikationen bedarf. Diese betreffen vor allem die Implementierung der Spannungsmessung am Piezo-Aktuator 1 (massebezogene Spannungsmessung V(+) oder Differenz-Spannungsmessung V(+) - V(-)) und der Strommessung mit Hilfe des (sehr kleinen) Strommesswiderstands 32, der in Reihenschaltung mit dem Piezo-Aktuator 1 (und dem zum jeweiligen Stellglied gehörigen Auswahlschalter 33) angeordnet ist.

Eine zur regulären Ansteuerung vorgesehene Endstufe ähnlich der in den Figuren 3 und 4 gezeigten Art ist aus der DE 10 2004 047 961 A1 an sich bekannt. Vorgesehen ist zunächst ein vom Bordnetz gespeister DCDC-Konverter 27, der ausgangsseitig eine hohe Versorgungsspannung (z.B. 200V) für die regulären Ansteuerpulse und den Kalibrierpuls liefert. Zwischen den Ausgang des DCDC-Konverters 27 und Bezugpotenzial ist (zur dynamischen Pufferung) ein Zwischenkreiskondensator 34 geschaltet und parallel dazu eine Leistungs-Endstufe 28, bestehend aus einer Reihenschaltung eines Lade- und Entladeschalttransistors T1 und T2, die jeweils über eine Treiberschaltung (z.B. Buck-Boost-Konverter) mittels eines Steuersignals einer Steuerschaltung, die Teil der Steuervorrichtung 25 sein kann, gesteuert werden. Über den Verbindungspunkt A dieser Schalttransistoren kann eine mit dem Piezo-Aktuator 1 in Reihe liegende Spule 35 (die zusammen mit einer weiteren Spule und weiteren Kondensatoren das Ausgangs-Filter 29, vergleiche Blockschaltbild Figur 4, bildet) taktweise entweder zum Aufladen mit der Ausgangspannung des DCDC-Konverters 27 oder zum Entladen mit Bezugspotenzial 0V (Masse) verbunden werden. Zum Erzeugen der regulären Ansteuerpulse der Einspritzventile und auch des Kalibrierpulses werden von der Steuerschaltung entsprechende Steuersignale ausgegeben, die von den Schalttransistoren T1 und T2 (und den Auswahlschaltern 33) umgesetzt werden.

## Patentansprüche

1.  Verfahren zur Kalibrierung eines in einem Kraftfahrzeug mittels einer Steuerschaltung und einer Endstufe betriebenen Piezo-Aktuators (1), der als Stellantrieb auf ein Schaltventil einwirkt, bei dem der Piezo-Aktuator (1) im Betrieb der Steuerschaltung und der Endstufe mit einem in seinem Großsignalbereich liegenden elektrischen Kalibrierpuls beaufschlagt wird, dessen Frequenz über die Zeit verändert wird, und bei dem der zugehörige elektrische Impedanzverlauf über die Frequenz ermittelt und ausgewertet wird, wobei die Endstufe von der Steuerschaltung so angesteuert wird, dass der Kalibrierpuls erzeugt wird.

2. Verfahren nach Anspruch 1, bei dem aus den Extremwerten des ermittelten Impedanzverlaufs die Resonanzfrequenzen ($f_p$, $f_s$) bestimmt werden und daraus der piezoelektrische Kopplungsfaktor ($k_{eff}$) abgeleitet wird, und bei dem der Kopplungsfaktor ($k_{eff}$) zur Bestimmung der nichtlinearen Materialkoeffizienten, die der Piezo-Aktuator (1) im Großsignalbereich aufweist, herangezogen wird.

3. Verfahren nach Anspruch 2, bei dem die dielektrischen Materialkoeffizienten des Piezo-Aktuators (1) im Großsignalbereich vorgegeben sind und zusammen mit dem ermittelten piezoelektrischen Kopplungsfaktor ($k_{eff}$) zur Bestimmung der nichtlinearen piezoelektrischen und/oder elastischen Materialkoeffizienten herangezogen werden.

4. Verfahren nach Anspruch 2 oder 3, bei dem abhängig von den ermittelten nichtlinearen Materialkoeffizienten mindestens ein Ansteuerparameter zum Ansteuern des Piezo-Aktuators (1) angepasst wird.

5. Verfahren nach einem der Ansprüche 1 bis 4, bei dem durch zusätzliche Auswertung weiterer in der Steuerschaltung vorliegender und/oder von ihr ermittelter Daten auf Ereignisse oder Zustände in einer mit dem Piezo-Aktuator (1) verbundenen, mechanisch bewegbaren Vorrichtung (31) geschlossen wird.

6. Verfahren nach Anspruch 5, bei dem abhängig von den ermittelten Ereignissen oder Zuständen mindestens ein Ansteuerparameter zum Ansteuern des Piezo-Aktuators (1) angepasst wird.

7. Verfahren nach einem der Ansprüche 1 bis 6, bei dem zur Ermittlung des Impedanzverlaufs die am Piezo-Aktuator (1) abfallende elektrische Spannung und der von diesem aufgenommene Strom erfasst wird, wobei der von der Endstufe angesteuerte Piezo-Aktuator (1) in Reihe mit einem an Masse liegenden Strommesswiderstand (32) geschaltet ist.

8. Verfahren nach Anspruch 7, bei dem das erfasste Spannungssignal dem analogen Eingang eines integrierten Mikroprozessors zugeführt wird, der das Spannungssignal durch Abtastung digitalisiert und danach auswertet.

9. Vorrichtung, insbesondere Steuergerät, zur On-Board-Kalibrierung eines in einem Kraftfahrzeug betriebenen Piezo-Aktuators (1), der ein Schaltventil antreibt, mit Mitteln zur Durchführung des Verfahrens nach einem der vorstehenden Ansprüche.

## Claims

1. Method for calibrating a piezoelectric actuator (1) which is operated in a motor vehicle by means of a control circuit and an output stage and which acts as the final control element on a control valve, wherein the piezoelectric actuator (1) is energised during the operation of the control circuit and the output stage by application of an electrical calibration pulse lying in its large-signal range, the frequency of said calibration pulse being varied over time, and wherein the associated electrical impedance profile is determined as a function of the frequency and evaluated, with the output stage being driven by the control circuit in such a way that the calibration pulse is generated.

2. Method according to claim 1, wherein the resonance frequencies ($f_p$, $f_s$) are determined from the extreme values of the ascertained impedance profile and the piezoelectric coupling factor ($k_{eff}$) is derived therefrom, and wherein the coupling factor ($k_{eff}$) is used for determining the nonlinear material coefficients which the piezoelectric actuator (1) has in the large-signal range.

3. Method according to claim 2, wherein the dielectric material coefficients of the piezoelectric actuator (1) in the large-signal range are predefined and are used together with the ascertained piezoelectric coupling factor ($k_{eff}$) for determining the nonlinear piezoelectric and/or elastic material coefficients.

4. Method according to claim 2 or 3, wherein at least one control parameter for controlling the piezoelectric actuator (1) is adjusted as a function of the ascertained nonlinear material coefficients.

5. Method according to one of claims 1 to 4, wherein deductions in relation to events or states in a mechanically movable device (31) connected to the piezoelectric actuator (1) can be made based on additional evaluation of further data present in and/or ascertained by the control circuit.

6. Method according to claim 5, wherein at least one control parameter for controlling the piezoelectric actuator (1) is adjusted as a function of the ascertained events or states.

7. Method according to one of claims 1 to 6, wherein the electrical voltage dropping at the piezoelectric actuator (1) and the current consumed by the latter are measured in order to determine the impedance profile, wherein the piezoelectric actuator (1) driven by the output stage is connected in series with a current-sensing resistor (32) connected to earth.

8. Method according to claim 7, wherein the measured voltage signal is supplied to the analogue input of an integrated microprocessor which digitises the voltage signal by sampling and subsequently evaluates it.

9. Device, in particular control device, for onboard calibration of a piezoelectric actuator (1) which is operated in a motor vehicle and which drives a control valve, said device having means for performing the method according to one of the preceding claims.


**Revendications**

1. Procédé d'étalonnage d'un actionneur piézoélectrique (1) exploité dans un véhicule automobile au moyen d'un circuit de commande et d'un étage de sortie, lequel actionneur agit comme mécanisme de commande sur une soupape de commande, dans lequel l'actionneur piézoélectrique (1) est alimenté, lors du fonctionnement du circuit de commande et de l'étage de sortie, par une impulsion d'étalonnage électrique se trouvant dans sa plage de signaux forts, impulsion dont la fréquence est modifiée au fil du temps, et dans lequel le tracé associé de l'impédance électrique est établi et exploité via la fréquence, l'étage de sortie étant commandé par le circuit de commande de telle sorte que l'impulsion d'étalonnage soit générée.

2. Procédé selon la revendication 1, dans lequel, à partir des valeurs extrêmes du tracé d'impédance établi, on détermine les fréquences de résonance ($f_p$, $f_s$) dont on déduit le coefficient de couplage piézoélectrique ($k_{eff}$), et dans lequel est rapproché le facteur de couplage ($k_{eff}$) pour déterminer les coefficients de matériel non linéaires présentés par l'actionneur piézoélectrique (1) dans la plage de signaux forts.

3. Procédé selon la revendication 2, dans lequel les coefficients de matériel diélectriques de l'actionneur piézoélectrique (1) sont prédéfinis dans la plage des signaux forts et sont rapprochés, ensemble avec le facteur de couplage piézoélectrique ($k_{eff}$) établi, pour déterminer les coefficients de matériel piézoélectriques et/ou élastiques non linéaires.

4. Procédé selon la revendication 2 ou 3, dans lequel, en fonction des coefficients de matériel non linéaires établis, on règle au moins un paramètre de commande pour commander l'actionneur piézoélectrique (1).

5. Procédé selon l'une quelconque des revendications 1 à 4, dans lequel, par exploitation supplémentaire d'autres données se trouvant dans le circuit de commande et/ou établis par celui-ci, on en conclut des événements ou des états dans un dispositif (31) mécaniquement déplaçable raccordé à l'actionneur piézoélectrique (1).

6. Procédé selon la revendication 5, dans lequel, en fonction des événements ou des états établis, on règle au moins un paramètre de commande pour commander l'actionneur piézoélectrique (1).

7. Procédé selon l'une quelconque des revendications 1 à 6, dans lequel, pour établir le tracé de l'impédance, on détecte la tension électrique s'appliquant à l'actionneur piézoélectrique (1) et le courant reçu par celui-ci, dans lequel l'actionneur piézoélectrique (1) commandé par l'étage de sortie est commuté en série avec une résistance de mesure de courant (32) à la masse.

8. Procédé selon la revendication 7, dans lequel le signal de tension détecté est acheminé à l'entrée analogique d'un microprocesseur intégré, qui numérise le signal de tension par balayage et l'exploite ensuite.

9. Dispositif, en particulier appareil de commande, pour étalonnage embarqué d'un actionneur piézoélectrique (1) exploité dans un véhicule automobile, qui entraîne une soupape de commande, avec des moyens pour réaliser le procédé selon l'une quelconque des revendications précédentes.

FIG 1

FIG 2    Stand der Technik

FIG 3

FIG 4

FIG 5

EP 2 208 241 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19804196 A1

- DE 102004047961 A1